**Europäisches Patentamt**

**European Patent Office**

**Office européen des brevets**

(19)

(11) Numéro de publication: **0 117 195**

**A1**

(12) # DEMANDE DE BREVET EUROPEEN

(21) Numéro de dépôt: **84400273.3**

(22) Date de dépôt: **09.02.84**

(51) Int. Cl.³: **F 16 K 31/00**

(30) Priorité: **14.02.83 FR 8302302**

(43) Date de publication de la demande:
**29.08.84 Bulletin 84/35**

(84) Etats contractants désignés:
**AT BE CH DE GB IT LI LU NL SE**

(71) Demandeur: **MECILEC S.A.**
**91 bis, rue du Cherche-Midi**
**F-75006 Paris(FR)**

(72) Inventeur: **Guillemot, Philippe**
**78 rue de L'Ouest**
**75014 Paris(FR)**

(74) Mandataire: **Hirsch, Marc-Roger**
**34 rue de Bassano**
**F-75008 Paris(FR)**

(54) **Electrovalves à commande piézoélectrique.**

(57) Elle comprend une lame ou membrane (4) susceptible d'entrer en infration sous l'action d'une commande piézoélectrique (7) et percée d'une ouverture circulaire formée par une bille (5) sollicitée vers son siège.

FIG. 1

**EP 0 117 195 A1**

# ELECTROVALVES A COMMANDE PIEZOELECTRIQUE

La présente invention a pour objet des dispositifs perfectionnés d'électrovalves à commande piézoélectrique. Ces dispositifs sont particulièrement conçus pour les cas d'ouvertures et de fermetures rapides, nettes, pour des débits et des différences de pressions relativement faibles. Ils conviennent donc tout particulièrement aux appareillages de mesure, de contrôle et de régulation nécessitant une grande précision dans les temps, les débits, les vitesses et les pressions.

De tels dispositifs s'appliquent en particulier aux capteurs numériques de pression faisant l'objet du brevet français 2.430.004 (du 30 juin 1978) de la demanderesse et de ses deux additions 2.431.690 (du 18 juillet 1978) et 2.498.754 (du 27 janvier 1981). Dans ces documents constituant un art antérieur de référence, on compare les pressions régnant dans une chambre à la pression à mesurer d'une part et une chambre à pression de référence d'autre part. La pression de référence est décalée d'un échelon de pression $\Delta p$ positif ou négatif prédéterminé toutes les fois que la pression à mesurer s'écarte de $\pm\Delta p$ par rapport à la pression de référence. Ceci revient donc à égaliser la pression entre les deux chambres par une mise en communication rapide, franche et précise. Divers dispositifs ont été proposés dans cet art antérieur ou une impulsion de commande provenant d'un détecteur de la variation $\pm\Delta p$ entre pression de référence et pression à mesurer, provoque l'ouverture de l'électrovalve. Ils font partie des nombreuses solutions classiques où un clapet est commandé par un dispositif électrique tel qu'un électroaimant ou électronique.

Selon la présente invention, le clapet est constitué par une lame ou membrane présentant une ouverture fermée par une bille sollicitée magnétiquement. Un dispositif piézoélectrique fait entrer en vibration la lame ou membrane et provoque le décollement de la bille qui rebondit alternativement entre son siège vibrant et une pièce formant enclume. Ce dispositif permet des ouvertures et des fermetures franches, précises, rapides et

2                    **0117195**

comme cela sera décrit plus en détail ci-dessous aisément maitrisables et contrôlables.

Selon une autre caractéristique, la lame ou membrane est associée à un anneau piézoélectrique. Cette lame ou membrane est de préférence légèrement galbée pour que les vibrations radiales de l'anneau piézoélectrique se traduisent par des vibrations plus amples et axiales du siège de la bille situé sensiblement au centre de l'ensemble. La bille est rappelée contre le siège au moyen d'un dispositif magnétique réglable. La bille est maintenue en position axiale dans une douille axiale où elle est libre de se déplacer entre le siège dont est pourvue la lame ou membrane et une enclume située en fond de douille, enclume et/ou douille pouvant être réglées axialement en position. Pour mieux faire comprendre les caractéristiques techniques et les avantages de la présente invention, on va en décrire un exemple de réalisation étant bien entendu que celui-ci n'est pas limitatif quant à son mode de mise en oeuvre et aux applications qu'on peut en faire.

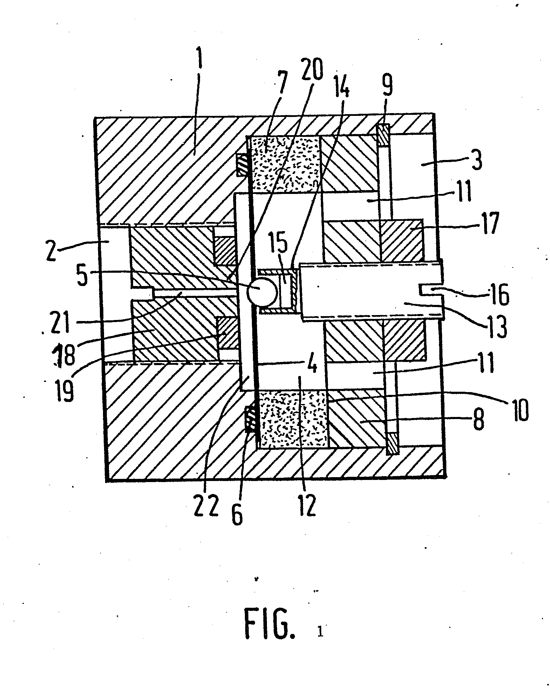

On se référera à la figure unique qui représente schématiquement en coupe axiale une électrovalve conforme à la présente invention.

Dans ce qui suit, on négligera les diverses accélérations extérieures au dispositif lui-même et notamment celle de la pesanteur, les forces propres au dispositif étant notablement supérieures, de sorte que le dispositif conforme à la présente invention peut fonctionner en toutes positions ou orientations.

Le corps 1 de l'électrovalve sépare les deux volumes à mettre en communication (réservoirs, canalisations ou autres) désignés généralement par 2 et 3. La valve elle-même est essentiellement constituée par le clapet lui-même 4 dont le trou central est normalement fermé par la bille 5. Le clapet est formé par un disque à bonnes propriétés mécaniques et étanche, par exemple réalisé en métal de faible épaisseur. A titre illustratif, pour un disque dont le diamètre est de l'ordre de 10 à 30 mm, le disque aura une épaisseur de l'ordre de 0,10 à 0,40 mm, la bille ayant un diamètre de l'ordre de 1 à 4 mm.

Il est particulièrement avantageux que le disque soit légèrement bombé pour les raisons qui seront ci-après exposées. Le disque 4 sépare deux cavités de préférence cylindriques coaxiales et de diamètres différents du côté 2 et du côté 3. Le disque 4 est monté sur le plan de section droite séparant les deux cavités de volumes différents. Il repose contre un joint 6 inséré dans une rainure circulaire et est collé contre une cellule piézoélectrique torique 7 maintenue en place par un bouchon de blocage 8 et un clip circulaire 9 qui vient se placer dans une gorge correspondante du corps 1. Une rondelle 10 d'alimentation électrique est intercalée entre le tore piézoélectrique 7 et le bouchon 8 de blocage. Ce dernier est percé en 11 pour mettre en communication le volume 3 et l'espace 12 compris entre le bouchon 8 et le disque 4. Toutes ces pièces sont sensiblement coaxiales. Au centre du bouchon 8 est vissée la pièce cylindrique filetée 13 qui porte en son extrémité côté clapet une douille tubulaire 14 dans laquelle peut se déplacer axialement la bille 5. Le fond de la douille 14 est en matériau dur, par exemple une petite enclume circulaire 15 sur laquelle peut rebondir la bille. La pièce filetée 13 est munie en 16 de tout moyen de vissage/dévissage pour régler son enfoncement et donc la distance entre disque 4 et enclume 15 entre lesquels se déplace la bille 5. Un contre-écrou 17 permet le blocage en position de la pièce filetée 13.

Dans la cavité de moindre diamètre située du côté 2 par rapport au disque 4 est vissé un ensemble constitué par une vis de réglage 18 et un aimant torique 19.

L'ensemble des pièces constitutives de la valve est de préférence en matériaux non magnétiques à l'exception de la bille 5 et de la vis 18 dont la partie centrale se prolonge en 20 pour recevoir l'aimant torique 19. Vis 18 et aimant 19 peuvent être en alliage à base de cobalt et de samarium.

Ceci permet une bonne répartition des lignes de force du champ magnétique et une action bien concentrée sur la bille 5. La vis 18 est percée en 21 pour permettre la communication entre le volume 2 et l'espace 22 situé entre le disque 4 et la vis 18. Le réglage de la vis 18 permet celui des forces d'attraction magnétiques agissant en rappel de la bille 5 contre son siège dans le disque 4. Ce siège peut être réalisé par exemple par électroérosion ou par ultrasons ce qui donne des arêtes vives puis on mate l'arête avec une bille de même diamètre que la bille 5 pour créer le siège.

Lorsque la cellule piézoélectrique 7 est excitée entre la rondelle 10 et la masse du dispositif à l'aide d'un circuit d'alimentation non représenté sur la figure, les vibrations radiales de la cellule torique 7 se traduisent du fait du bombement du disque 4 par une vibration axiale de la partie centrale du disque et donc du siège de la bille 5 qui rebondit entre ce siège entrant en vibration et l'enclume 15. Le réglage de position de l'enclume 15 à l'aide de la pièce filetée 13 permet de rechercher des conditions d'entrée en résonance de la bille à un harmonique de la fréquence

4            **0117195**

de la cellule piézoélectrique (de l'ordre de 50 kHz) pour donner une évaluation à titre illustratif. L'amplitude de vibration de la bille est très
faible de l'ordre de quelques microns (5 à 10 µ par exemple), des accélérations étant de l'ordre de quelques centaines de fois celle de la pesanteur (250 à 350 g par exemple).

On conçoit donc que l'on dispose de nombreuses variables pour faire
varier l'ouverture de l'électrovalve. L'ouverture est commandée par envoi
d'une fréquence d'intégration modulée à la fréquence voulue. Le débit augmente avec la durée du train d'impulsions et en jouant sur la durée relative
des trains d'impulsions et des temps morts séparant les trains d'impulsions.
Ceci peut être obtenu par tout circuit classique comprenant par exemple
une porte ET, recevant d'une part la fréquence d'excitation et d'autre part
les créneaux de validation, suivie de l'amplificateur nécessaire pour disposer de la tension d'alimentation de la cellule piézoélectrique.

L'intérêt de l'action quasi immédiate de la validation et du fonctionnement de l'électrovalve réside dans la grande rapidité et la grande
précision du fonctionnement.

Il est évident que ce type d'électrovalves peut trouver de nombreux
domaines d'application en dehors de celle mentionnée ci-dessus à propos des
capteurs de pression, et ceci sans sortir du cadre de la présente invention.

REVENDICATIONS

1.- Valve à commande piézoélectrique, caractériséepar le fait qu'elle comprend une lame ou membrane susceptible d'entrer en vibrations sous l'action d'une commande piézoélectrique et percée d'une ouverture circulaire fermée par une bille sollicitée vers son siège.

2.- Valve selon la revendication 1, caractérisée par le fait que le dispositif est de révolution, la lame ou membrane étant circulaire, l'ouverture axiale, la bille étant maintenue de façon à se déplacer selon l'axe commun, le dispositif piézoélectrique de commande étant disposé annulairement sur la lame ou membrane.

3.- Valve selon l'une des revendications 1 ou 2, caractérisée par le fait que les éléments constitutifs sont amagnétiques sauf la bille qui est sollicitée vers son siège par un dispositif magnétique.

4.- Valve selon l'une des revendications 1 à 3, caractérisée par le fait que la bille entre en résonance sous l'action des vibrations de la lame ou de la membrane et se déplace entre cette dernière et une enclume de rebondissement.

5.- Valve selon l'une des revendications 3 à 4, caractérisé par le fait que le dispositif magnétique est réglable en position par rapport à la bille.

6.- Valve selon l'une des revendications 4 ou 5, caractérisée par le fait que l'enclume est réglable en position par rapport à la bille.

7.- Valve selon l'une des revendications 1 à 6, caractérisé par le fait qu'elle est appliquée à des capteurs de pression.

FIG. 1

Office européen
des brevets

**RAPPORT DE RECHERCHE EUROPEENNE**

0117195
Numéro de la demande

EP 84 40 0273

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 465 732 (KATTCHEE)<br>* Colonne 2, ligne 22 - colonne 3, ligne 22 *<br>--- | 1 | F 16 K 31/00 |
| A | US-A-4 298 181 (CORRADO)<br>--- | | |
| A | US-A-4 195 811 (CORRADO)<br>--- | | |
| A | FR-A-2 425 599 (COMMISSARIAT A L'ENERGIE ATOMIQUE)<br>--- | | |
| A | FR-A-2 188 771 (BRITISH OXYGEN)<br>----- | | |

**DOMAINES TECHNIQUES RECHERCHES (Int. Cl. ³)**

F 16 K
G 01 L

Le présent rapport de recherche a été établi pour toutes les revendications

| Lieu de la recherche | Date d'achèvement de la recherche | Examinateur |
|---|---|---|
| LA HAYE | 08-05-1984 | VERELST P.E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82